(19) Europäisches Patentamt
European Patent Office
Office européen des brevets

(11) **EP 2 775 411 A1**

(12) **EUROPEAN PATENT APPLICATION**

(43) Date of publication:
**10.09.2014 Bulletin 2014/37**

(51) Int Cl.:
***G06F 17/50*** (2006.01)

(21) Application number: **13382071.2**

(22) Date of filing: **04.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Veigalan Estudio 2010 S.L.U.**
**48200 Durango, Bizkaia (ES)**
• **Casa Maristas Azterlan**
**48200 Durango, Vizcaya (ES)**

(72) Inventors:
• **Fernández, Ana**
**48200 Durango, Bizkaia (ES)**
• **Niklas, Andrea**
**48200 Durango, Bizkaia (ES)**
• **Lizarralde, Ibon**
**48200 Durango, Bizkaia (ES)**
• **Suárez, Ramón**
**48200 Durango, Bizkaia (ES)**

(74) Representative: **Stiebe, Lars Magnus et al**
**Balder IP Law, S.L.**
**Paseo de la Castellana 120**
**28046 Madrid (ES)**

(54) **Method for predicting the structure of a part cast in an aluminium alloy**

(57) The invention relates to a method for predicting at least one first characteristic parameter of a structure of a part (100) cast in an aluminium alloy, comprising:
i) by means of a thermal analysis technique recording a solidification curve of said alloy in a standard thermal analysis cup and obtaining a plurality of second characteristic parameters of said solidification curve of the alloy;
ii) obtaining said first characteristic parameter of the structure of the part using a pre-established equation that relates at least one of a plurality of first characteristic parameters of the structure of the part to the thermal modulus, MODULUS, and to at least one of said plurality of second characteristic parameters of the solidification curve, wherein the thermal modulus, MODULUS, is calculated on the basis of a DAS parameter according to the following equation:

$$MODULUS = (DAS-a)/b$$

where a and b are constants, and the DAS parameter is the secondary dendrite arm spacing of the structure of the part.

FIG. 3

EP 2 775 411 A1

**Description**

**TECHNICAL FIELD**

The present invention relates to aluminium alloys, and more particularly to casting parts in an aluminium alloy suitable for manufacturing parts/components for the automotive, industrial and electrical sectors, which require specific performances and quality.

**BACKGROUND OF THE INVENTION**

Aluminium-silicon moulding alloys are the most frequently used alloys in the manufacture of high performance aluminium casting parts due to their excellent capacity for casting and the versatility of their mechanical properties. A major share of their mechanical properties are the result of treatments applied to the metal in the liquid state, including the one known as grain refinement in particular, based on adding nucleants to the aluminium during solidification. Grain refinement exerts a positive influence on several important properties of this alloy, particularly on reducing porosity and the tendency to hot tearing. Another common treatment is the one known as eutectic Si modification by means of adding elements such as Sr and/or Na. These elements modify the solidification structure of eutectic Al-Si, in such a way that it adopts a fine structure and a globular appearance. This is the preferred structure due to its good mechanical properties. The degree of modification (DM) is defined as the degree of refinement of eutectic Si (Apelian, A., Sigworth, G. K. and Whaler, K R., AFS Trans. 84-161: 297-307, 1984).

At the same time, the state of the art is aware of the usefulness of the thermal analysis technique for evaluating the metallurgical quality of the liquid metal, wherein AlSi7Mg alloys have been one of the most researched alloys for decades.

The thermal analysis curve of an aluminium alloy reflects the thermal events that take place during cooling of the metal, which are directly related to the phase transformations that take place in the sample or test cup. The analysis of these solidification curves allows a quantitative study to be made of solidification phenomena, since the cooling curve incorporates the entire history of the part, reflecting the most important structural characteristics, such as grain size, DAS (secondary dendrite arm spacing), degree of modification and major phases in different parameters.

The metallurgical quality of the liquid metal is evaluated by means of casting standard thermal sand cups. The normal casting temperature of AlSi7Mg alloys ranges between 700 ᵒC - 750 ᵒC.

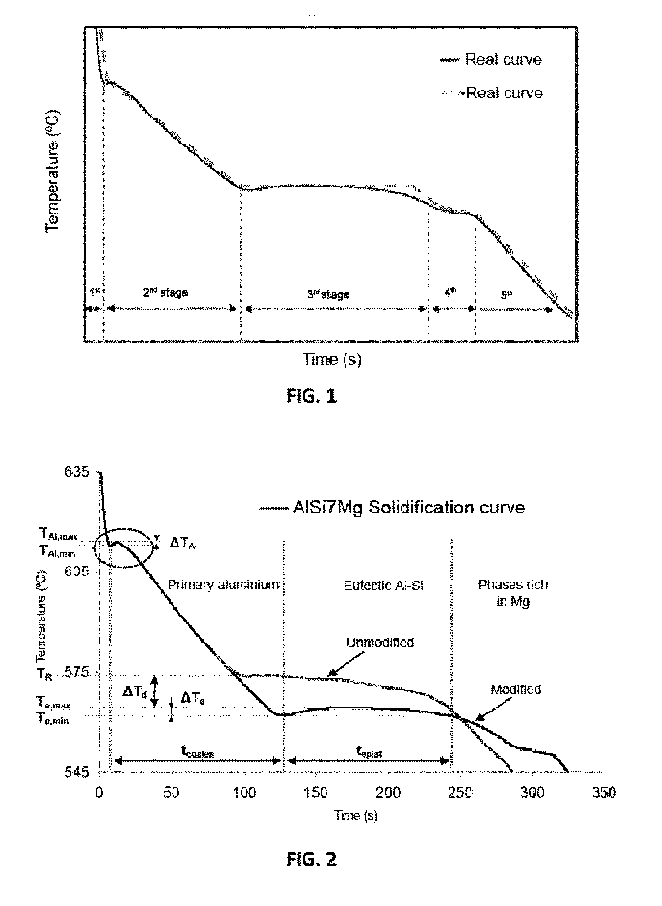

As shown in Figure 1, the liquid-solid transformation process of AlSi7Mg alloys occurs in five stages:

- In a first stage, it is considered that the totally liquid metal cools at a constant speed and proportional to the specific heat of the liquid, until reaching the liquidus temperature.
- In the second stage, the liquid material becomes gradually a solid material, with the growth of the primary aluminium phases in the form of dendrites until reaching the eutectic temperature where the remaining liquid enriched with silicon reaches the eutectic Al-Si concentration and the phases of eutectic Al-Si begin to solidify.
- The third stage responds to the formation of the eutectic Al-Si once the remaining liquid has reached the eutectic Al-Si concentration (approx. 11.7 %). Once this stage has concluded, the metal is in a solid state except for a small fraction of liquid containing high percentages of Mg and Si.
- In the fourth stage the small percentage of material that is still in a liquid state starts becoming solid, until completely transforming, this moment corresponding to the point of reaching solidus temperature. In this stage the formation of $Mg_2Si$ and $\pi\text{-}Al_8Mg_3FeSi_6$ magnesium and silicon-rich phases occurs and also of intermetallic phases rich in Fe ($\alpha\text{-}Al_{15}(Fe,Mn)_3Si_2$ and $\beta\text{-}Al_5FeSi$).
- The fifth stage comprises the period from the moment the entire material has become solid until the end of cooling.

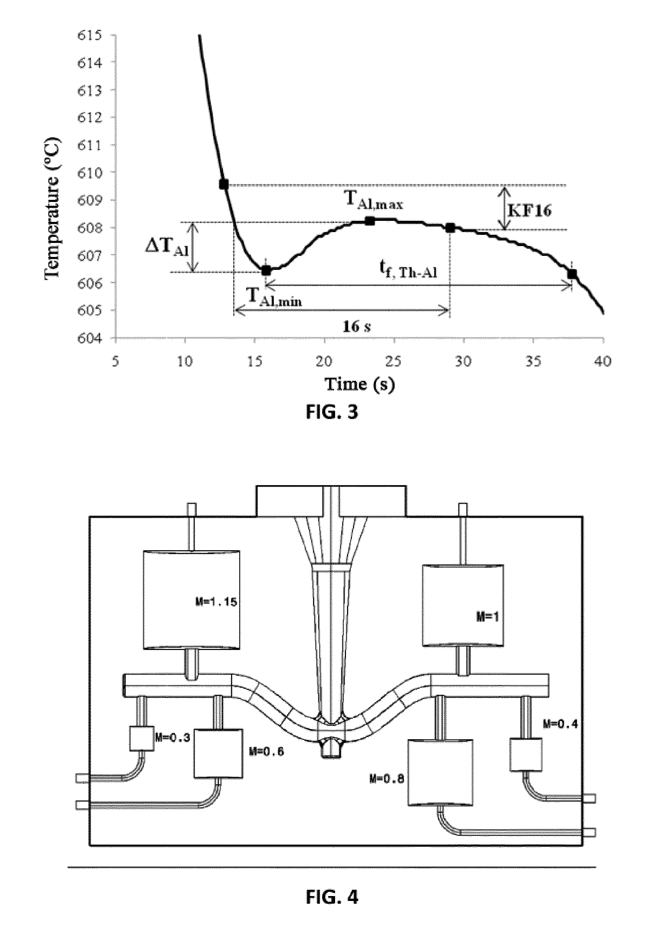

Figure 2 shows a standard solidification curve of the AlSi7Mg alloy using the nomenclature of the curve's characteristic parameters. Figure 3 shows in greater detail the elliptic zone shown by means of a broken line in Figure 2.

As shown in these two figures, the characteristic parameters of the solidification curve are:

- $T_{Al,max}$: Primary aluminium maximum temperature.
- $T_{Al,min}$: Primary aluminium minimum temperature.
- $\Delta T_{Al}$ (or also $\Delta T_{rec}$): Primary aluminium recalescence. Temperature difference between $T_{Al,max}$ and $T_{Al,min}$.
- $T_{e,max}$: Maximum eutectic temperature.
- $T_{e,min}$: Minimum eutectic temperature.
- $\Delta T_e$: Eutectic recalescence. Temperature difference between $T_{e,max}$ and $T_{e,min}$.
- $T_R$: Eutectic temperature or reference temperature of the unmodified alloy, calculated by means of the equation proposed by Mondolfo (Gruzleski, J. E. and Closset, B. M., "The Treatment of Liquid Aluminum-Silicon Alloys", Ed.

The American Foundrymen's Association Inc., 1990).

$$T_R=577-(12,5/\%Si)*((4,43*\%Mg)+(1,43*\%Fe)).$$

- $\Delta T_d$: Eutectic depression. Temperature difference between $T_{e,max}$ and $T_R$
- $t_{eplat}$: eutectic Plateau time. Time elapsed from the minimum eutectic temperature until the curve reaches that same temperature again.
- $t_{coales}$: Coalescence time or time between primary aluminium minimum and the eutectic minimum.
- KF16: Temperature difference between the point at which the cooling speed becomes higher than -2 ºC/s and the temperature of the thermal analysis curve 16 seconds later.
- $t_{f,Th-Al}$, is defined as the time that elapses between the moment when the minimum temperature is reached and that same temperature again is reached again. When recalescence is zero, it is considered the time at which the temperature remains constant.
- $GS_{Th-Al}$: is calculated using the following equation based on the adjustment between experimental GS (grain size) data of the standard thermal analysis cup and the characteristic parameters of the solidification curve for more than 300 experimental measurements:

$$GS_{Th-Al}=0,91+(0,029* t_{f,Th-Al})+(0,067*KF16)+(0,025*( t_{f,Th-Al}-4,71))+(0,68* \Delta T_{Al})$$

The characteristic parameters of cooling curves related to grain size depend on primary phase nucleation and are: $\Delta T_{Al}$, KF16 and $t_{f,Th-Al}$.

For decades now, it has been possible to determine the quality of the metal in aluminium alloys through thermal analysis. The problem is that good grain refinement in the thermal analysis cup does not guarantee suitable refinement in the real parts due to differences in the speeds of solidification.

DESCRIPTION OF THE INVENTION

The object of the present invention is to provide a method for predicting at least a first characteristic parameter of the structure of a part made of an aluminium alloy.

The method for predicting the structure of the real part takes as its starting point an analysis of the quality of the alloy constituting said part by means of thermal analysis, recording the solidification curve of said alloy in a standard thermal analysis cup.

This prediction of the structure of the part is valid irrespective of the different cooling speeds of the real parts associated to their thermal modulus and/or the type of mould used (for example, sand mould or metal mould).

The invention relates to a method for predicting at least a characteristic parameter of the structure of a part cast in an aluminium alloy according to claim 1. Preferred embodiments of the method are defined in the dependent claims.

In accordance with a first aspect of the invention, the invention relates to a method for predicting at least a first characteristic parameter of the structure of a casting part in an aluminium alloy, which comprises:

i) by means of a thermal analysis technique recording a solidification curve of said alloy in a standard thermal analysis cup and obtaining a plurality of second characteristic parameters of said solidification curve of the alloy;

ii) obtaining said first characteristic parameter of the structure of the part using a pre-established equation that relates said at least one characteristic parameter of the structure of the part to the thermal modulus, MODULUS, and to at least one of said plurality of second characteristic parameters of the solidification curve, wherein the thermal modulus, MODULUS, is calculated on the basis of a DAS parameter according to the following equation:

$$MODULUS=(DAS-a)/b;$$

where a and b are constants, which preferably depend on the mould in which the part has been cast, and the DAS parameter is the secondary dendrite arm spacing of the structure of the part.

In other words, by relating the theoretical parameters to the quantitative measurements it is possible to model and therefore predict structural characteristics of the part on the basis of the thermal analysis measurements obtained using a thermal analysis technique, preferably Thermolan®-Al.

This way, since by means of the method of the invention it is possible to predict characteristic parameters of the structure of the resulting part, it is possible to establish corrective action if necessary to improve the quality of the part before casting into the mould.

Said mould may be a mould of sand or a metallic mould.

The aluminium alloy is preferably of the type AlSi7Mg.

The aforesaid DAS parameter can be obtained through finite element simulation or by experimental measurements of the parts.

The first characteristic parameter of the structure can be: grain size GS and/or degree of modification DM and/or the fraction of intermetallic phases rich in Fe and/or the fraction of phases of Mg.

The pre-established equation that relates the first parameter to the thermal modulus, MODULUS, and to at least one of said plurality of second parameters is preferably determined in the following manner:

- a series of test parts are cast having the same geometry and different sizes made of such alloy, each test part having a different cooling speed and, consequently, a different thermal modulus;
- said first characteristic parameter of the structure of the test parts is obtained on the basis of the thermal modulus;
- an adjustment is made of said first parameter by means of an equation that constitutes the aforesaid pre-established equation.

Said test parts are preferably cylinders having a height equal to their diameter.

The pre-established equation is preferably:

$$GS_{sand} = 0,20 + 0,05 * t_{f,Th-Al} - 0,13 * MODULUS + 0,73 * GS_{Th-Al} * MODULUS,$$

where:

- GS is the grain size of the part;
- $t_f$ is a characteristic parameter of the solidification curve of the alloy defined as the time that elapses between reaching the minimum temperature of primary aluminium $T_{Al,min}$ and that same temperature $T_{Al,min}$ is reached on the curve again;
- MODULUS is the thermal modulus of the part; and
- $GS_{Th-Al}$ is the grain size obtained through a statistical adjustment of the values of the experimental grain size obtained from the second characteristic parameters of the solidification curve.

The degree of refinement and degree of modification can be checked in all casts, by using prediction equipment (for example, Thermolan®-Al by Azterlan), based on the prediction of structural characteristics in the standard thermal analysis cup, by recording the solidification curve.

The plurality of second characteristic parameters of the solidification curve is preferably one or more of:

- $T_{Al,max}$: primary aluminium maximum temperature;
- $T_{Al,min}$: primary aluminium minimum temperature;
- $\Delta T_{Al}$ primary aluminium recalescence;
- $T_{e,max}$: maximum eutectic temperature;
- $T_{e,min}$: minimum eutectic temperature;
- $\Delta T_e$: eutectic recalescence;
- $T_R$: eutectic temperature;
- $\Delta T_d$: eutectic depression or temperature difference between $T_{e,max}$ and $T_R$;
- $t_{eplat}$: eutectic Plateau time;
- $t_{coales}$: coalescence time;
- KF16: temperature difference between the point at which the cooling speed becomes higher than -2 ºC/s and the temperature of the solidification curve 16 seconds later;
- $t_{f,Th-Al}$: the time that elapses between reaching the minimum temperature of primary aluminium $T_{Al,min}$ and the same temperature $T_{Al,min}$ being reached on the curve again, obtained by means of a thermal analysis technique;
- $GS_{Th-Al}$: grain size calculated on the basis of the adjustment between experimental data of the grain size from the standard thermal analysis cup and the characteristic parameters of the solidification curve for more than 300 experimental measurements.

In accordance with a second aspect of the invention, the invention relates to a method for determining an equation that relates at least a first characteristic parameter of the structure of a part cast in an aluminium alloy to its thermal modulus, MODULUS, and to at least one of a plurality of second characteristic parameters of a solidification curve of the alloy; wherein the method comprises:

- by means of a thermal analysis technique recording a solidification curve of said alloy in a standard thermal analysis cup and obtaining said plurality of second characteristic parameters of said solidification curve of the alloy;
- casting a series of test parts having the same geometry and different sizes made of said alloy, each test part having a different cooling speed and, therefore, a different thermal modulus;
- obtaining said first characteristic parameter of the structure of the test parts as a function of the thermal modulus;
- performing an adjustment of the first parameter using an equation that constitutes the aforesaid pre-established equation.

The benefits and additional characteristics of the invention will be evident from the detailed description that follows and are particularly disclosed in the attached claims.

**BRIEF DESCRIPTION OF THE DRAWINGS**

As a complement to the description and with a view to contributing to a better understanding of the characteristics thereof, a set of drawings is attached based on a practical embodiment, forming an integral part of the description, and representing by way of illustration and not limitation, the following:

Figure 1 shows the different stages in the liquid-solid transformation process of AlSi7Mg alloys.
Figure 2 shows a standard thermal analysis curve of an AlSi7Mg alloy with its characteristic parameters.
Figure 3 shows an expanded view of the area identified by an ellipse in Figure 2.
Figure 4 shows an outline of the metal mould used for the cylindrical test parts having different thermal modulus.
Figure 5 shows the mean DAS of each test part analysed against the thermal modulus, in both the sand mould and the metal mould.
Figures 6 and 7 show the DAS data obtained by means of simulation in the sand mould and in the metal mould, respectively.
Figures 8 and 9 are a graphic representations of the mean DAS values and of the DAS values obtained through simulation against the thermal modulus in sand moulds and metal moulds, respectively.
Figure 10 shows the grain size GS of the cylinders against the thermal modulus for cylinders cast in the sand mould.
Figure 11 shows, on the left hand side, the slope values of the alloys against the grain size GS of Thermolan®-Al, and on the right hand side, the values of the constant of the alloys against $t_{f,Th-Al}$ measured in the standard thermal analysis cup.
Figure 12 shows the experimental grain size of the cylinder cast in sand against the calculated grain size.
Figure 13 shows the experimental grain size of the cylinders against the grain size calculated using the experimental mean DAS values on the left hand side and the DAS values obtained through simulation on the right hand side.
Figure 14 shows a steering knuckle from which measurements have been taken in order to verify the results obtained.
Figure 15 shows the results of the DAS simulation on the steering knuckle of Figure 14.
Figures 16 and 17 show the experimental grain size GS against the calculated grain size GS, with the mean experimental DAS values and with the DAS values obtained through simulation, respectively for the cylinders and the steering knuckles.

**DESCRIPTION OF A MODE OF EMBODIMENT OF THE INVENTION**

In order to obtain the prediction method of the invention, the effect of the cooling speed is analysed on the AlSi7Mg alloy with different degrees of refinement. The correlation is obtained between the results of the standard thermal analysis cup and of cylindrical test parts having different diameters cast in sand moulds and in metal moulds.
The procedure performed consists of making melts of a series of AlSi7Mg cast alloys in sand moulds and in metal moulds from which different sizes of test parts are obtained in the shape of cylinders.
These moulds have been designed in such a way that the height of each cylinder is equal to its diameter, in such a way that it is easy to calculate the thermal modulus of each cylinder.
Figure 4 shows an outline of the metal mould used to cast cylindrical test parts having a different thermal modulus M (volume/surface of cooling), specifically for values of the thermal modulus of 1.15, 1, 0.8, 0.6, 0.4 and 0.3. The design is very similar for the sand mould, wherein the cylindrical test parts have values of the thermal modulus of 1.5, 1.15, 1, 0.8, 0.6 and 0.4.
This range of test parts covers cooling speeds ranging from 1.5 ºC/s up to 30 ºC/s, evaluated in the temperature range prior to the start of solidification.

The following table, Table 1, shows the chemical compositions of the analysed AlSi7Mg alloys.

**Table 1**

| Ref | Chemical composition (% in weight) | | | | | | | | | | |
|-----|------|------|-------|-------|------|-------|-------|-------|------|--------|------|
|     | Si   | Fe   | Cu    | Mn    | Mg   | Cr    | Ni    | Zn    | Ti   | Sr     | Na   |
| I    | 7,26 | 0,10 | <0,01 | <0,01 | 0,41 | <0,01 | <0,01 | <0,01 | 0,12 | <0,003 |      |
| II   | 7,07 | 0,13 | <0,01 | <0,01 | 0,50 | <0,01 | <0,01 | <0,01 | 0,16 | <0,003 |      |
| III  | 6,99 | 0,16 | 0,01  | <0,01 | 0,35 | <0,01 | <0,01 | 0,02  | 0,16 | 0,010  |      |
| IV   | 6,62 | 0,14 | <0,01 | <0,01 | 0,28 | <0,01 | <0,01 | <0,01 | 0,14 | <0,003 | 0,01 |
| V    | 6,86 | 0,19 | 0,02  | 0,01  | 0,39 | <0,01 | 0,01  | 0,01  | 0,16 | 0,009  |      |
| VI   | 6,83 | 0,09 | <0,01 | <0,01 | 0,31 | <0,01 | 0,01  | <0,01 | 0,14 | 0,011  |      |
| VII  | 6,30 | 0,13 | 0,03  | <0,01 | 0,32 | <0,01 | <0,01 | 0,05  | 0,19 | 0,013  |      |
| VIII | 6,90 | 0,18 | <0,01 | 0,02  | 0,53 | 0,01  | <0,01 | <0,01 | 0,14 | 0,011  |      |
| IX   | 6,83 | 0,14 | <0,01 | <0,01 | 0,52 | <0,01 | <0,01 | <0,01 | 0,13 | 0,013  |      |

As can be seen from Table 1, there are some series, I and II, which do not present any modification with strontium or with sodium. At the same time, series IV is modified with sodium and all other series with strontium between 0.009% and 0.013%. The tests conducted seek to obtain different qualities of the metal, to perform tests with different degrees of refinement and with different degrees of modification.

In total, tests have been carried out on the nine alloys in the sand mould and in the metal mould.

Further, for each alloy, I-IX, a test has been carried out using the Thermolan®-Al predictive thermal analysis technique in a standard thermal analysis cup. The most significant parameters of the solidification curves ($t_{coales}$, $t_{f,Th-Al}$, $\Delta T_{Al}$ and $t_{plateau}$), and the predictions for the degree of modification $DM_{Th-Al}$ and the grain size $GS_{Th-Al}$ are shown in Table 2.

**Table 2.** Data obtained from Thermolan®-Al for each alloy I-IX

| REF | $DM_{Th-Al}$ | $GS_{Th-Al}$ (mm) | $t_{coales}$ (s) | $t_{f,Th-Al}$ (s) | $\Delta T_{Al}$ (ºC) | KF16 (ºC) | $t_{plateau}$ (s) |
|------|-----|------|-------|-----|-----|------|-------|
| I    | 4   | 0.74 | 107.6 | 6.4 | 0.2 | 4.85 | 126.3 |
| II   | 3   | 0.60 | 114.0 | 7.0 | 0.2 | 3.53 | 130.0 |
| III  | 3   | 0.51 | 129.6 | 4.4 | 0   | 4.33 | 136.0 |
| IV   | 6   | 0.47 | 134.4 | 2.2 | 0   | 5.28 | 81.8  |
| V    | 3.5 | 0.47 | 120.3 | 2.2 | 0   | 5.18 | 141.7 |
| VI   | 2.9 | 0.46 | 124.9 | 2.0 | 0   | 4.74 | 139.7 |
| VII  | 2.8 | 0.40 | 110.9 | 0.9 | 0   | 5.78 | 130.0 |
| VIII | 4.6 | 0.41 | 124   | 0.0 | 0   | 4.46 | 98.0  |
| IX   | 4.1 | 0.52 | 135   | 3.2 | 0   | 5.23 | 130.5 |

These parameters have been used to analyse the calculation of the mathematical model described below.

DAS has been calculated using the mean of the nine alloys, in both the sand mould and the metal mould.

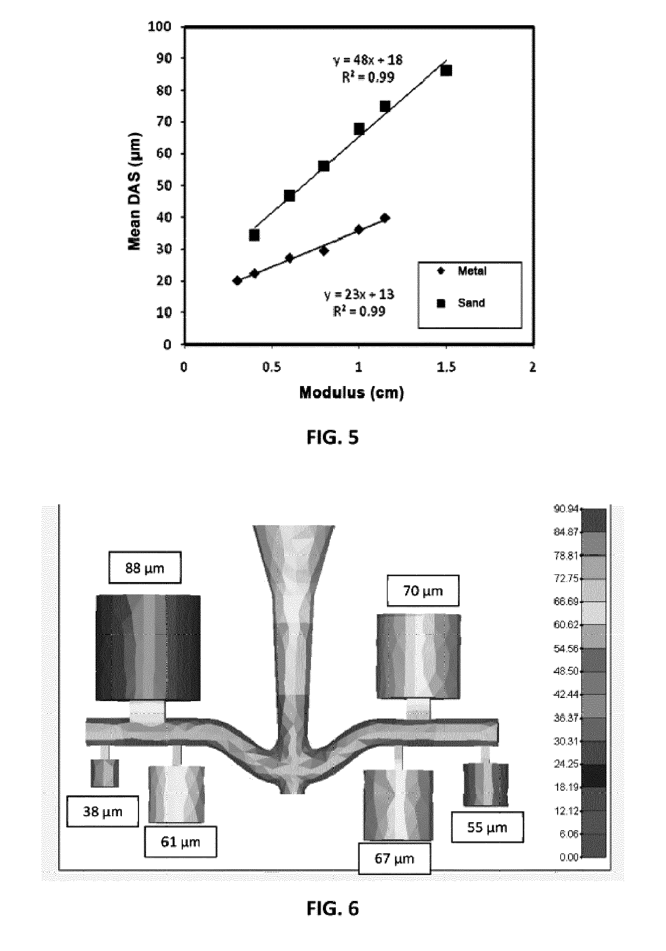

Figure 5 shows the mean DAS of each test part analysed against the thermal modulus, in both the sand mould and the metal mould.

The mean DAS values of the nine alloys for the different alloys according to each thermal modulus of the test parts shown in Figure 4 can be approximately connected by a straight line.

The equation of this line is as follows for the sand mould:

$$DAS_{SAND} = 48*MODULUS + 18 \qquad\qquad [1]$$

And in the case of the metal mould (die) the equation is as follows:

$$DAS_{METAL}= 22*MODULUS + 13 \hspace{4cm} [2]$$

In both cases, the degree of adjustment $R^2$ is 0.99.

On a separate note, in addition to these DAS values measured on the test parts, a simulation of the DAS is carried out using the Quikcast® program.

Figure 6 shows the values obtained for the DAS using Quikcast® simulation in the sand mould. As shown in Figure 6, the DAS values in the centre of the cylinder are:

- 88 $\mu$m for the cylinder with thermal modulus 1.5 cm;
- 70 $\mu$m for the thermal modulus of 1.15 cm;
- 67 $\mu$m for the thermal modulus of 1 cm;
- 61 $\mu$m for the thermal modulus of 0.8 cm;
- 55 $\mu$m for the thermal modulus of 0.6 cm;
- for the thermal modulus of 0.4 a DAS of 38 $\mu$m is obtained.

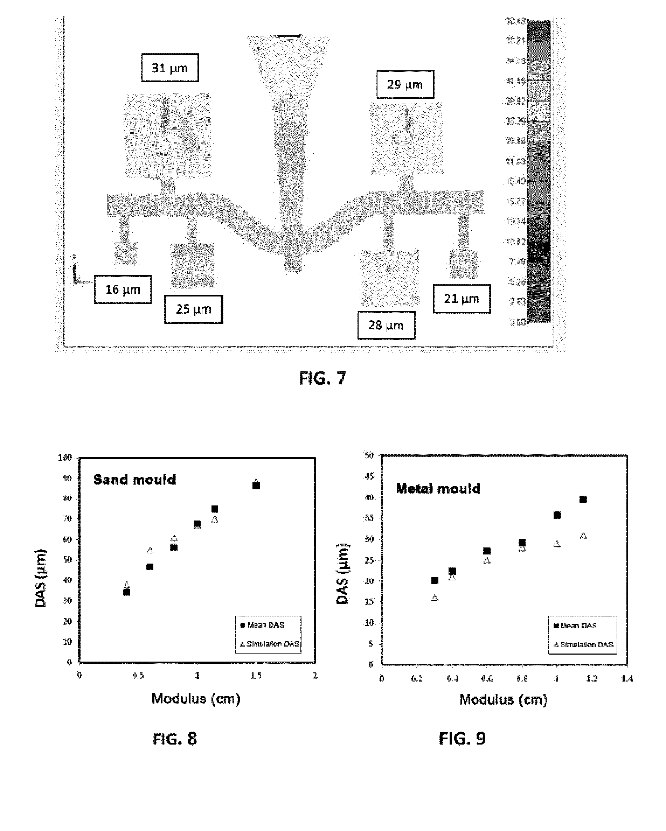

Similarly, Figure 7 shows the values obtained for the DAS by means of simulation using Quikcast® in the metal mould. As shown in Figure 7, the DAS values in the centre of the cylinder are:

- 31 $\mu$m for the thermal modulus of 1.15 cm;
- 29 $\mu$m for the thermal modulus of 1 cm;
- 28 $\mu$m for the thermal modulus of 0.8 cm;
- 25 $\mu$m for the thermal modulus of 0.6 cm;
- 21 $\mu$m for the thermal modulus of 0.4 cm;
- 16 $\mu$m for the thermal modulus of 0.3 cm.

Figure 8 jointly shows the mean DAS values against the thermal modulus (shown in Figure 3) and the DAS values obtained through simulation against the thermal modulus for the sand mould.

Figure 9 is equivalent to Figure 8, but for the metal mould.

As it can be seen:

- In the sand mould, the DAS value obtained through simulation is similar to the mean experimental DAS value.
- In the metal mould, the DAS obtained through simulation is slightly lower than the mean experimental DAS.

In other words, equations [1] and [2] provide a valid approximation for DAS based on the thermal modulus and vice versa.

GS Grain Size prediction

All of alloys I-IX have been used for grain size GS prediction.

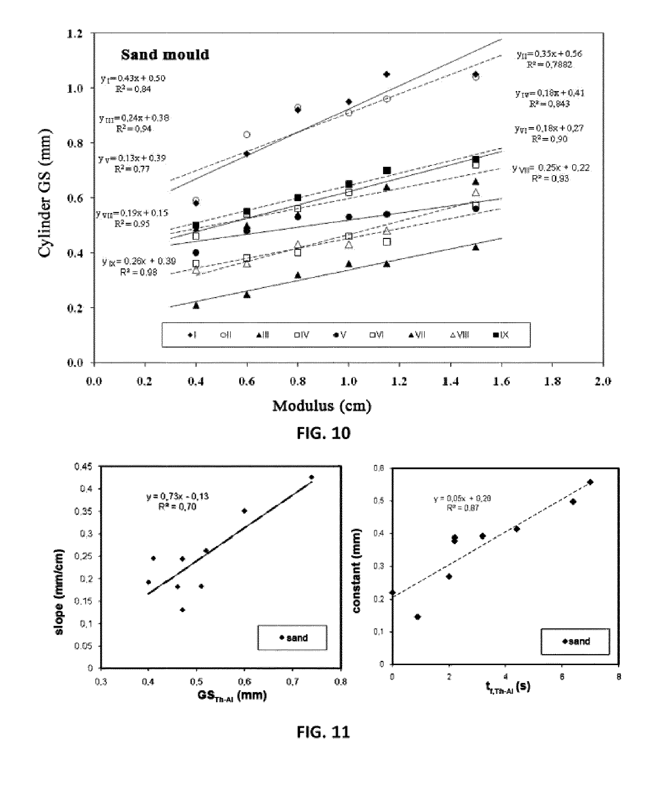

Figure 10 shows the effect of the thermal modulus on the grain size GS of the cylinders cast in sand moulds for the different degrees of refinement in the standard thermal analysis cup. A reduction in the grain size GS can be observed when the thermal modulus decreases.

It can also be appreciated that for all alloys there is a linear relationship between the grain size GS of the cylinders and the thermal modulus. The corresponding adjustment equations are shown also in Figure 9. However, both the constant and the slope of adjustment of these lines depend on the degree of refinement of the alloy, which is evaluated using the characteristic parameters of the Thermolan®-Al.

Figure 11 shows the adjustments of the slopes and constants of each straight line of Figure 10.

With respect to slope adjustment (graph on the left in Figure 11) a straight line is obtained according to the grain size using the Thermolan®-Al, $GS_{Th-Al}$, the degree of adjustment $R^2$ in this case being 0.70. For the constants (graph on the right in Figure 11), the adjustment to a straight line has been made based on the values of time $t_{f,Th-Al}$ obtaining an adjustment of 0.87. Both data $GS_{Th-Al}$, $t_{f,Th-Al}$ can be extracted from Table 2, since previously the corresponding measurements have been made for each alloy using the thermal analysis cup.

According to the tests performed and the values analysed, it is possible to predict the grain size in the case of a sand mould $GS_{sand}$ based on the thermal modulus (MODULUS) and two parameters of the related Thermolan®-Al according to the following equation:

$$GS_{sand} = 0,20 + 0,05*t_{f,Th-Al} - 0,13*MODULUS + 0,73*TG_{Th-Al}*MODULUS \quad [3]$$

In other words, the method developed in the present invention allows the grain size GS of a cast part to be predicted knowing only two of the parameters evaluated on the solidification curve by means of the Thermolan®-Al and the thermal modulus of the different sections of the part.

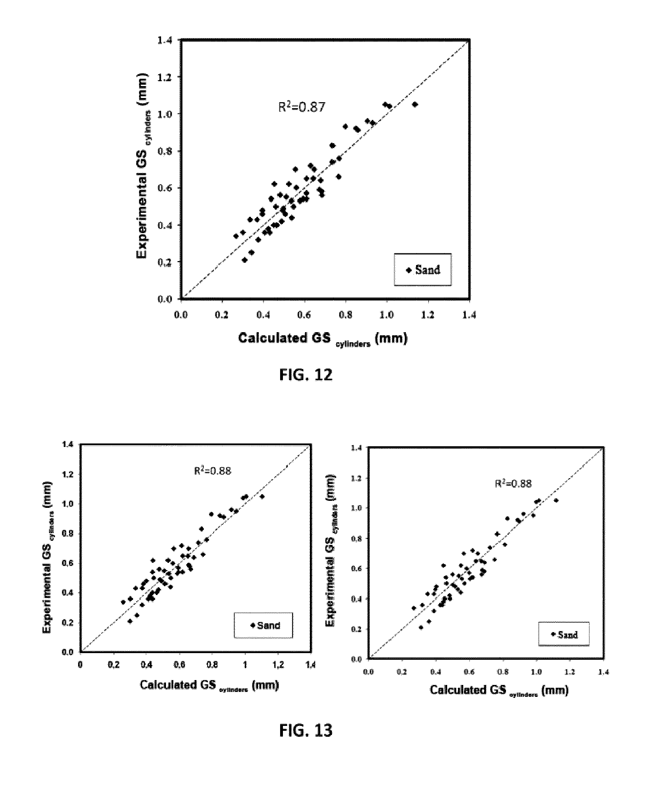

Figure 12 shows the grain size calculated according to the equation [3] against the experimental grain size for the sand mould. The degree of adjustment between the calculated and the experimental values is high, with $R^2$ being equal to 0.87.

This equation [3] depends among other factors on the thermal modulus. However, previously, during the tests carried out in order to determine DAS, the latter has been obtained as a function of the thermal modulus in equations [1] and [2]. By clearing the thermal modulus from the equation and replacing this equation [3] the following is obtained:

$$GS_{sand}=0,20+0,05*t_{f,Th-Al}-0,13*((DAS-18)/48)+0,73*GS_{Th-Al}*((DAS-18)/48) \quad [4]$$

wherein the DAS values are the mean experimental values or the values obtained in the simulation. The remaining parameters are the ones obtained in the thermal cup of the Thermolan®-Al.

Figure 13 shows the experimental GS versus the calculated GS. On the one hand it shows the GS values calculated using the mean experimental DAS values (graph on the left) and on the other hand, using the DAS values obtained through simulation (graph on the right). In the case of the sand mould, using the mean experimental DAS values, the adjustment is equal to 0.88 and the adjustment is 0.88 using the DAS values obtained through simulation.

After obtaining the equation, its validity has been verified.

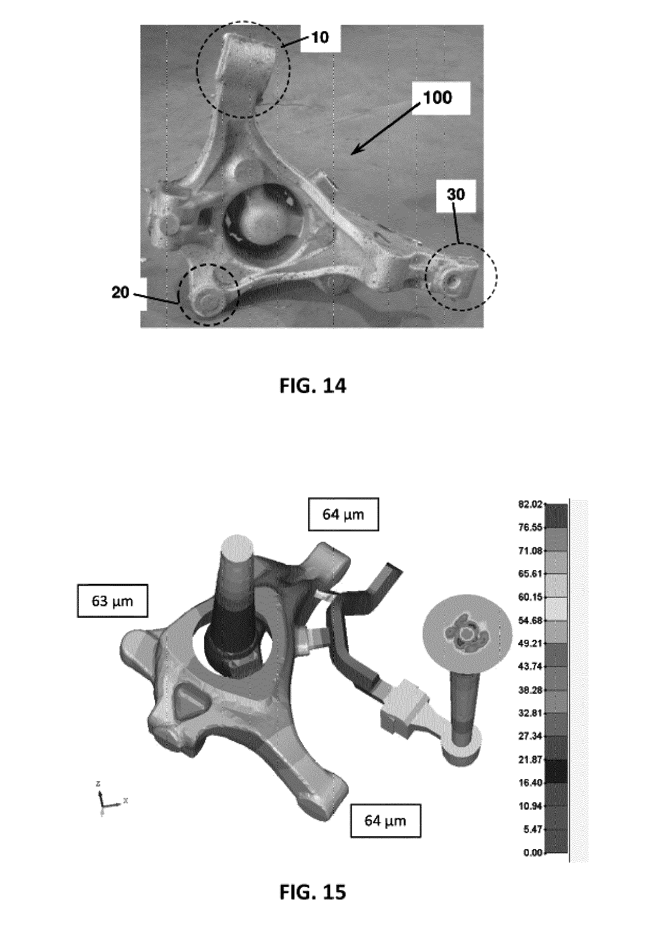

To this effect a part has been selected, which is a steering knuckle (Figure 14). Different tests were carried out with different chemical compositions and metal treatments so as to having different metallurgical qualities in terms of the DAS, degree of modification and grain size.

Table 3 shows the chemical composition of the AlSi7Mg alloys analysed for the steering knuckle (% in weight) and the grain size $GS_{Th-Al}$ and $t_{f,Th-Al}$ parameters obtained with the Thermolan®-Al.

**Table 3**

| Ref | Chemical composition (% in weight) | | | | | | | | | | $GS_{Th-Al}$ (mm) | $t_{f,Th-Al}$ (s) |
|-----|------|------|------|------|------|------|------|------|------|------|------|------|
| | Si | GS | Cu | Mn | Mg | Cr | Ni | Zn | Ti | Sr | | |
| A | 6.65 | 0.17 | 0.02 | <0.01 | 0.50 | <0.01 | <0.01 | <0.01 | 0.16 | 0.013 | 0.72 | 6.3 |
| B | 6.83 | 0.14 | <0.01 | <0.01 | 0.52 | <0.01 | <0.01 | <0.01 | 0.13 | 0.013 | 0.52 | 5.0 |
| C | 6.91 | 0.15 | <0.01 | <0.01 | 0.52 | <0.01 | <0.01 | <0.01 | 0.20 | 0.011 | 0.42 | 1.1 |
| D | 6.91 | 0.15 | <0.01 | <0.01 | 0.52 | <0.01 | <0.01 | <0.01 | 0.20 | 0.011 | 0.41 | 1.0 |
| E | 6.96 | 0.15 | <0.01 | <0.01 | 0.53 | <0.01 | <0.01 | <0.01 | 0.17 | 0.006 | 0.47 | 2.1 |
| F | 6.78 | 0.15 | 0.01 | 0.01 | 0.55 | <0.01 | <0.01 | <0.01 | 0.18 | 0.016 | 0.44 | 1.4 |
| G | 6.78 | 0.15 | 0.01 | 0.01 | 0.55 | <0.01 | <0.01 | <0.01 | 0.18 | 0.016 | 0.45 | 1.8 |

The zones analysed are the ones marked 10, 20 and 30 in figure 14.

Table 4 shows the mean DAS value of each zone and the DAS obtained through simulation for each of those zones:

**Table 4**

| | Mean DAS ($\mu$m) | Simulation DAS ($\mu$m) |
|-----|------|------|
| 10 | 61 | 64 |
| 20 | 57 | 63 |
| 30 | 55 | 64 |

Figure 15 shows the results of the DAS obtained through simulation for the steering knuckle of Figure 14.

Next equation [4] has been applied, together with the values obtained in the Thermolan®-Al for $GS_{Th-Al}$ $t_{f,Th-Al}$ and the DAS values obtained for the steering knuckle.

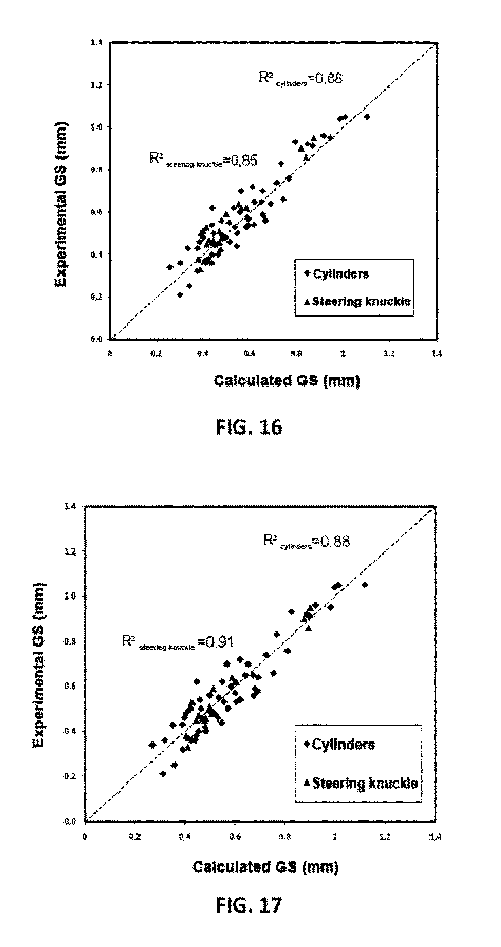

Figure 16 shows the experimental grain size GS versus the grain size GS calculated using the mean experimental DAS values.

Figure 17 shows the experimental grain size GS versus the grain size GS calculated using the DAS value obtained through simulation for the steering knuckle.

By using the mean experimental DAS values the adjustment is 0.85 and the adjustment is 0.91 when the DAS values obtained through simulation are used.

Therefore, the methodology employed is appropriate since the results obtained are adequate.

In this text, the word "comprises" and variants thereof (such as "comprising", etc.,) must not be interpreted in an excluding manner, in other words, they do not exclude the possibility of what is being described including other elements, steps, etc.

At the same time, the invention is not limited to the specific embodiments that have been described but also encompass, for example, variants that could be embodied by an average person skilled in the art (for example, in terms of the choice of materials, dimensions, components, configuration, etc.), within the scope of what is set out in the claims.

**Claims**

1.  Method for predicting at least a first characteristic parameter of the structure of a part (100) cast in an aluminium alloy, comprising:

    i) by means of a thermal analysis technique recording a solidification curve of said alloy in a standard thermal analysis cup and obtaining a plurality of second characteristic parameters of said solidification curve of the alloy;
    ii) obtaining said first characteristic parameter of the structure of the part using a pre-established equation that relates said at least one characteristic parameter of the structure of the part with the thermal modulus, MODULUS, and with at least one of said plurality of second characteristic parameters of the solidification curve, wherein the thermal modulus, MODULUS, is calculated on the basis of a DAS parameter according to the following equation:

$$MODULUS = (DAS-a)/b$$

    where a and b are constants, and the DAS parameter is the secondary dendrite arm spacing of the structure of the part.

2.  Method according to claim 1, wherein said DAS parameter is obtained by means of finite element simulation.

3.  Method according to claim 1, wherein said DAS parameter is obtained by means of experimental measurements of the part.

4.  Method according to any of claims 1-4, wherein said constants depend on the mould in which the part has been cast.

5.  Method according to any of claims 1-4, wherein said pre-established equation that relates the first parameter to the thermal modulus, MODULUS, and to at least one of said plurality of second parameters is determined by:

    - moulding a series of test parts having the same geometry and different sizes made of said alloy, each test part having a different cooling speed and, consequently, a different thermal modulus;
    - obtaining the first characteristic parameter of the structure of said test parts according to the thermal modulus;
    - carrying out an adjustment of the first parameter using an equation that constitutes said pre-established equation.

6.  Method according to claim 7, wherein said test parts are cylinders having an equal height to their diameter.

7.  Method according to any of claims 4-6, wherein said mould is made of sand.

8.  Method according to any of claims 4-6, wherein said mould is made of metal.

9.  Method according to any of claims 1-7, wherein the pre-established equation is:

$$GS_{sand} = 0,20 + 0,05 * t_{f,Th-Al} - 0,13 * MODULUS + 0,73 * GS_{Th-Al} * MODULUS,$$

where:

- $GS_{sand}$ is the grain size of the part in the sand mould;
- $t_{f,Th-Al}$ is a characteristic parameter of the solidification curve of the alloy defined as the time that elapses between reaching the minimum temperature of primary aluminium $T_{Al,min}$ and reaching that same temperature $T_{Al,min}$ on the curve again;
- MODULUS is the thermal modulus of the part; and
- $GS_{Th-Al}$ is the grain size obtained by means of a statistical adjustment of the values of the experimental grain size obtained with the second characteristic parameters of the solidification curve.

10. Method according to any of claims 1-9, wherein said plurality of second characteristic parameters of the solidification curve is:

- $T_{Al,max}$: primary aluminium maximum temperature;
- $T_{Al,min}$: primary aluminium minimum temperature;
- $\Delta T_{Al}$ primary aluminium recalescence;
- $T_{e,max}$: maximum eutectic temperature;
- $T_{e,min}$: minimum eutectic temperature;
- $\Delta T_e$: eutectic recalescence;
- $T_R$: eutectic temperature;
- $\Delta T_d$: eutectic depression or temperature difference between $T_{e,max}$ and $T_R$;
- $t_{eplat}$: eutectic Plateau time;
- $t_{coales}$: coalescence time;
- KF16: temperature difference between the point at which the cooling speed becomes higher than -2 ºC/s and the temperature of the solidification curve sixteen seconds later;
- $t_{f,Th-Al}$: time elapsing between reaching the minimum temperature of primary aluminium $T_{Al,min}$ and the curve again reaching that same temperature $T_{Al,min}$, obtained by means of a thermal analysis technique;
- $GS_{Th-Al}$: grain size calculated on the basis of the adjustment between experimental data of the grain size in the standard thermal analysis cup and the characteristic parameters of the solidification curve for more than 300 experimental measurements.

11. Method according to any of claims 1-10, wherein said first characteristic parameter of the structure is the grain size GS, and/or the degree of modification DM, and/or the fraction of the intermetallic phases rich in Fe and/or the fraction of phases of Mg.

12. Method according to any of claims 1-11, wherein the thermal analysis technique is Thermolan®-Al.

13. Method according to any of claims 1-12, wherein the aluminium alloy is of the type AlSi7Mg.

14. Method of determining an equation that relates at least one first characteristic parameter of the structure of a part (100) cast in an aluminium alloy to its thermal modulus, MODULUS, and to at least one of a plurality of second characteristic parameters of a solidification curve of the alloy; wherein the method comprises:

- by means of a thermal analysis technique recording a solidification curve of said alloy in a standard thermal analysis cup and obtaining said plurality of second characteristic parameters of the solidification curve of the alloy;
- moulding a series of test parts having the same geometry and different sizes made of said alloy, each test part having a different cooling speed and a different thermal modulus;
- obtaining at least one first characteristic parameter of the structure of said test parts as a function of the thermal modulus;
- carrying out an adjustment of the first parameter using an equation that constitutes said pre-established equation.

**FIG. 1**

**FIG. 2**

**FIG. 3**

**FIG. 4**

FIG. 5

FIG. 6

FIG. 7

FIG. 8

FIG. 9

**FIG. 10**

**FIG. 11**

FIG. 12

FIG. 13

FIG. 14

FIG. 15

FIG. 16

FIG. 17

Europäisches
Patentamt

European
Patent Office

Office européen
des brevets

## EUROPEAN SEARCH REPORT

Application Number

EP 13 38 2071

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Niklas, Andrea and Abaunza, Unai, and Fernandez-Calvo, Ana Isabel and Lacze, Jacques and Suarez, Ramon: "Thermal analysis as a microstructure prediction tool for A356 aluminium parts solidified under various cooling conditions", (2011) In: 69th World Foundry Congress (WFC), 16-20 oct 2010, Hangzjou, China , 20 October 2010 (2010-10-20), pages 1-7, XP002707593, Retrieved from the Internet: URL:http://oatao.univ-toulouse.fr/5836/1/Lacaze_5836.pdf [retrieved on 2013-07-24] * the whole document * | 1-13 | INV. G06F17/50 |
| X | L. Lizarralde ET AL: "Effect of the thermal modulus and mould type on the grain size of AlSi7Mg alloy", Light Materials 2013, 23 February 2013 (2013-02-23), pages 327-331, XP55072964, Retrieved from the Internet: URL:http://onlinelibrary.wiley.com/doi/10.1002/9781118663189.ch57/pdf [retrieved on 2013-07-25] | 14 | |
| | TECHNICAL FIELDS SEARCHED (IPC) | | |
| | G06F | | |
| Y | * the whole document * | 1-13 | |

The present search report has been drawn up for all claims

| Place of search | Date of completion of the search | Examiner |
|---|---|---|
| Munich | 30 July 2013 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 775 411 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **APELIAN, A. ; SIGWORTH, G. K. ; WHALER, K R.** *AFS Trans.,* 1984, vol. 84-161, 297-307

- **GRUZLESKI, J. E. ; CLOSSET, B. M.** The Treatment of Liquid Aluminum-Silicon Alloys. The American Foundrymen's Association Inc, 1990